# EUROPÄISCHE PATENTANMELDUNG

(11) **EP 3 812 901 A1**
(43) Veröffentlichungstag der Anmeldung: **28.04.2021**
(21) Anmeldenummer: 19205362.7
(22) Anmeldetag: 25.10.2019
(51) Int. Cl.: G06F 9/50

(54) **CLOUD-COMPUTING MIT DYNAMISCHER CLOUD**

(71) Anmelder: Elektrobit Automotive GmbH, 91058 Erlangen (DE)
(72) Erfinder: Stellwag, Claus - c/o Continental Automotive GmbH, 65824 Schwalbach a. Ts. (DE)
(74) Vertreter: Continental Corporation

(57) **Zusammenfassung**

Die vorliegende Erfindung betrifft ein Verfahren, ein Computerprogramm mit Instruktionen und eine Vorrichtung zum Betreiben eines Cloud-Computing-Systems mit zumindest einer ortsfesten Basis und ortsveränderlichen Komponenten. Die Erfindung betrifft des Weiteren ein Cloud-Computing-System, das eine erfindungsgemäße Vorrichtung aufweist oder in dem ein erfindungsgemäßes Verfahren realisiert ist, sowie ein Kraftfahrzeug und ein mobiles Nutzergerät zur Verwendung in einem solchen Cloud-Computing-System. In einem ersten Schritt wird erfasst (10), dass sich eine erste ortsveränderliche Komponente in einer räumlichen Nähe der ortsfesten Basis befindet. Die erste ortsveränderliche Komponente wird daraufhin in das Cloud-Computing-System eingebunden (11). Nach erfolgreicher Einbindung erfolgt ein Zuweisen (12) von Rechenkapazität der ersten ortsveränderlichen Komponente für das Cloud-Computing-System. Wenn die erste ortsveränderliche Komponente zu einem späteren Zeitpunkt die räumlichen Nähe der ortsfesten Basis wieder verlässt, wird sie aus dem Cloud-Computing-System entfernt (13).

## Beschreibung

Die vorliegende Erfindung betrifft ein Verfahren, ein Computerprogramm mit Instruktionen und eine Vorrichtung zum Betreiben eines Cloud-Computing-Systems mit zumindest einer ortsfesten Basis und ortsveränderlichen Komponenten. Die Erfindung betrifft des Weiteren ein Cloud-Computing-System, das eine erfindungsgemäße Vorrichtung aufweist oder in dem ein erfindungsgemäßes Verfahren realisiert ist, sowie ein Kraftfahrzeug und ein mobiles Nutzergerät zur Verwendung in einem solchen Cloud-Computing-System.

Cloud-Computing beschreibt den Ansatz, Infrastrukturen der Informationstechnologie über ein Rechnernetz zur Verfügung zu stellen, ohne dass diese auf lokalen Rechnern installiert sein müssen. Cloud-Computing-Systeme beinhalten in der Regel Speicherplatz, Rechenkapazität oder Anwendungssoftware als Dienstleistung. Typischerweise existiert eine Cloud in einem Rechenzentrum, das gegebenenfalls als verteiltes Rechenzentrum ausgestaltet sein kann. Als deutsche Bezeichnung werden vereinzelt die Begriffe Rechnerwolke oder Datenwolke verwendet, allerdings hat sich in der Fachwelt die englische Bezeichnung etabliert, sodass diese nachfolgend verwendet wird.

Es ist eine Aufgabe der vorliegenden Erfindung, Lösung bereitzustellen, die das Betreiben eines dynamischen Cloud-Computing-Systems ermöglichen.

Diese Aufgabe wird durch ein Verfahren zum Betreiben eines Cloud-Computing-Systems mit den Merkmalen des Anspruchs 1, durch ein Computerprogramm mit Instruktionen mit den Merkmalen des Anspruchs 8, durch eine Vorrichtung zum Betreiben eines Cloud-Computing-Systems mit den Merkmalen des Anspruchs 9 sowie durch ein Kraftfahrzeug mit den Merkmalen des Anspruchs 10 und ein mobiles Nutzergerät mit den Merkmalen des Anspruchs 11 gelöst. Bevorzugte Ausgestaltungen der Erfindung sind Gegenstand der abhängigen Ansprüche.

Gemäß einem ersten Aspekt der Erfindung umfasst ein Verfahren zum Betreiben eines Cloud-Computing-Systems mit zumindest einer ortsfesten Basis und ortsveränderlichen Komponenten die Schritte:
- Erfassen, dass sich eine erste ortsveränderliche Komponente in einer räumlichen Nähe der ortsfesten Basis befindet;
- Einbinden der ersten ortsveränderlichen Komponente in das Cloud-Computing-System, und
- Zuweisen von Rechenkapazität der ersten ortsveränderlichen Komponente für das Cloud-Computing-System.

Gemäß einem weiteren Aspekt der Erfindung umfasst ein Computerprogramm Instruktionen, die bei Ausführung durch einen Computer den Computer zur Ausführung der folgenden Schritte zum Betreiben eines Cloud-Computing-Systems mit zumindest einer ortsfesten Basis und ortsveränderlichen Komponenten veranlassen:
- Erfassen, dass sich eine erste ortsveränderliche Komponente in einer räumlichen Nähe der ortsfesten Basis befindet;
- Einbinden der ersten ortsveränderlichen Komponente in das Cloud-Computing-System, und
- Zuweisen von Rechenkapazität der ersten ortsveränderlichen Komponente für das Cloud-Computing-System.

Der Begriff Computer ist dabei breit zu verstehen. Insbesondere umfasst er auch Workstations, verteilte Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Betreiben eines Cloud-Computing-Systems mit zumindest einer ortsfesten Basis und ortsveränderlichen Komponenten auf:
- ein Positionsprüfungsmodul zum Erfassen, dass sich eine erste ortsveränderliche Komponente in einer räumlichen Nähe der ortsfesten Basis befindet;
- ein Teilnehmerverwaltungsmodul zum Einbinden der ersten ortsveränderlichen Komponente in das Cloud-Computing-System, und
- ein Kapazitätsverwaltungsmodul zum Zuweisen von Rechenkapazität der ersten ortsveränderlichen Komponente für das Cloud-Computing-System.

Bei der erfindungsgemäßen Lösung wird eine dynamische Cloud unter Verwendung von ortfesten Komponenten oder Teilnehmern, sogenannten Basen oder Basisstationen, und ortsveränderlichen Komponenten oder Teilnehmern etabliert. Im Gegensatz zu einer klassischen Cloud, die in einem Rechenzentrum oder einem verteilten Rechenzentrum existiert, wird erfindungsgemäß eine Cloud nach Bedarf erzeugt. Dabei stellen die einzelnen Teilnehmer, insbesondere die ortsveränderlichen Komponenten, Anteile ihrer jeweiligen vorgehaltenen Rechenkapazität zur Verfügung. Ein solches Cloud-Computing-System hat den Vorteil, dass nur geringe Rechenkapazitäten in den Basisstationen vorgehalten werden müssen, da durch die ortsveränderlichen Komponenten deutlich größere Rechenkapazitäten bereitgestellt werden können. Zudem sind die Latenzzeiten zwischen den Teilnehmern des Cloud-Computing-Systems geringer als bei einem reinen Cloud-Ansatz, da zwischen den Teilnehmern eine räumliche Nähe existiert. Dynamische Clouds ermöglichen die Realisierung neuer Geschäftsmodelle, indem beispielsweise eine Abrechnung der bereitgestellten Rechenkapazitäten erfolgt.

Unter dem Begriff ortsfest ist hier zu verstehen, dass eine Basis zumindest vorübergehend ortsfest aufgebaut ist, auch wenn es grundsätzlich möglich ist, die Basis an einen anderen Standort zu verbringen.

Gemäß einem Aspekt der Erfindung wird die erste ortsveränderliche Komponente aus dem Cloud-Computing-System entfernt, wenn sie die räumlichen Nähe der ortsfesten Basis verlässt. Wenn eine ortsveränderliche Komponente sich wieder von der Basis entfernt, kann sie irgendwann nicht mehr oder zumindest nicht mehr sinnvoll durch das Cloud-Computing-System genutzt werden, z.B. weil eine Verbindung zur Basis abreißt oder gewünschte Latenzzeiten nicht mehr gewährleistet werden können. Wann eine ortsveränderliche Komponente konkret aus dem Cloud-Computing-System entfernt wird, liegt im Ermessen des Fachmanns. Insbesondere kann auch vorgesehen sein, dass eine ortsveränderliche Komponente abhängig von der konkreten räumlichen Entfernung nur für bestimmte Aufgaben genutzt wird, während sie von anderen Aufgaben ausgenommen ist.

Gemäß einem Aspekt der Erfindung werden durch die ortsveränderlichen Komponenten Positionsinformationen bereitgestellt. Auf Grundlage der bereitgestellten Positionsinformationen kann auf einfache Weise bestimmt werden, in welcher Entfernung von der Basis sich eine ortsveränderliche Komponente befindet.

Gemäß einem Aspekt der Erfindung werden durch die ortsveränderlichen Komponenten Routeninformationen oder Manöverdaten bereitgestellt. Auf Grundlage dieser Informationen kann ermittelt werden, wie lange die Rechenkapazität einer ortsveränderlichen Komponenten zur Verfügung stehen wird. Dies erlaubt eine bessere Planung, wie die Rechenkapazitäten eingesetzt werden können.

Gemäß einem Aspekt der Erfindung erfolgt das Einbinden der ersten ortsveränderlichen Komponente in das Cloud-Computing-System und eine Zuweisung einer Aufgabe an die erste ortsveränderliche Komponente durch die Basis. Die ortsfesten Teilnehmer fungieren somit als Master, während die ortsveränderlichen Komponenten Slaves darstellen. Dies hat den Vorteil, dass jede dynamischen Cloud lokal durch die Basis verwaltet und kontrolliert wird, sodass keine zentrale Steuerung erforderlich ist.

Gemäß einem Aspekt der Erfindung sind die ortsveränderlichen Komponenten Kraftfahrzeuge oder mobile Nutzergeräte. Echtzeitanwendungen im Verkehrsumfeld erfordern eine sehr zeitnahe Reaktion. Beispielsweise sollen Gefahren, die von einem Fahrzeug erkannt werden, möglichst schnell auch an andere Verkehrsteilnehmer propagiert werden. Zukünftig sind zudem Applikationen angedacht, die einerseits eine hohe Rechenkapazität benötigen, andererseits aber auch möglichst lokal berechnet werden müssen, da eine minimale zeitliche Verzögerung gefordert wird. In neueren Mobilfunkstationen werden aus diesem Grund Rechenkapazitäten für solche Aufgaben vorgehalten. Da sowohl in Kraftfahrzeugen als auch in mobilen Geräten zunehmend große Rechenkapazitäten vorgehalten werden, die oftmals zumindest teilweise ungenutzt bleiben, bietet es sich an, auch die in Kraftfahrzeugen oder mobilen Geräten verfügbaren Rechenkapazitäten für derartige Anwendungen zu nutzen.

Gemäß einem Aspekt der Erfindung wird die Rechenkapazität der ersten ortsveränderlichen Komponente für eine Validierung eines Zertifikats oder einen Aufbau eines Umgebungsmodells in der Basis verwendet. Dabei handelt es sich um typische Aufgaben, die eine hohe Rechenkapazität benötigen, aber in Hinblick auf eine minimale zeitliche Verzögerung möglichst lokal berechnet werden müssen. Für derartige Aufgaben ist die erfindungsgemäße Lösung daher ideal geeignet.

Gemäß einem Aspekt der Erfindung weist ein Cloud-Computing-System mit zumindest einer ortsfesten Basis und ortsveränderlichen Komponenten eine erfindungsgemäße Vorrichtung auf oder ist eingerichtet, ein erfindungsgemäßes Verfahren zum Betreiben des Cloud-Computing-Systems auszuführen. Die Basis kann insbesondere eine Basisstation für einen Mobilfunkdienst sein. Ein solches Cloud-Computing-System hat den Vorteil, dass nur geringe Rechenkapazitäten in der Basis vorgehalten werden müssen, da durch die ortsveränderlichen Komponenten deutlich größere Rechenkapazitäten bereitgestellt werden können. Die verfügbaren Ressourcen werden so optimal eingesetzt.

Vorzugsweise ist ein Kraftfahrzeug eingerichtet, in ein erfindungsgemäßes Cloud-Computing-System eingebunden zu werden und dem Cloud-Computing-System Rechenkapazität eines Rechnersystems bereitzustellen. Bei dem Kraftahrzeug handelt es sich beispielsweise um ein autonomes, teilautonomes oder mit Assistenzsystemen ausgestattetes Kraftahrzeug. In Kraftfahrzeugen werden zukünftig vermehrt HPC-Rechner (HPC: High-Performance Computing; Hochleistungsrechnen) zum Einsatz kommen, insbesondere in Hinblick auf das teilautonome oder vollautonome Fahren. In Kraftfahrzeugen werden daher große Rechenkapazitäten zur Verfügung stehen, die in vielen Situationen nicht oder nur zu einem Teil genutzt werden. Durch die erfindungsgemäße Lösungen können diese Ressourcen optimal für zusätzliche Aufgaben eingesetzt werden. Die Kommunikation zwischen dem Kraftfahrzeug und der Basis kann beispielsweise 5G-Technik nutzen.

Vorzugsweise ist ein mobiles Nutzergerät eingerichtet, in ein erfindungsgemäßes Cloud-Computing-System eingebunden zu werden und dem Cloud-Computing-System Rechenkapazität eines Prozessors bereitzustellen. Bei dem mobilen Nutzergerät kann es sich beispielsweise um ein Smartphone, ein Tablet oder einen Laptop handeln. Auch in modernen Smartphones und Tablets stehen große Rechenkapazitäten zur Verfügung, die häufig ungenutzt bleiben. Es bietet sich daher an, für eine effektive Nutzung der verfügbaren Prozessorleistung auch solche Geräte für ein erfindungsgemäßes Cloud-Computing-System zu nutzen.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Betreiben eines Cloud-Computing-Systems mit zumindest einer ortsfesten Basis und ortsveränderlichen Komponenten;
- Fig. 2: zeigt schematisch eine erste Ausführungsform einer Vorrichtung zum Betreiben eines Cloud-Computing-Systems mit zumindest einer ortsfesten Basis und ortsveränderlichen Komponenten;
- Fig. 3: zeigt schematisch eine zweite Ausführungsform einer Vorrichtung zum Betreiben eines Cloud-Computing-Systems mit zumindest einer ortsfesten Basis und ortsveränderlichen Komponenten;
- Fig. 4: zeigt schematisch ein Kraftfahrzeug, das zur Verwendung in einem erfindungsgemäßen Cloud-Computing-System eingerichtet ist;
- Fig. 5: zeigt schematisch ein mobiles Nutzergerät, das zur Verwendung in einem erfindungsgemäßen Cloud-Computing-System eingerichtet ist; und
- Fig. 6: zeigt schematisch die Verwendung eines Kraftfahrzeugs in einem erfindungsgemäßen Cloud-Computing-System.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

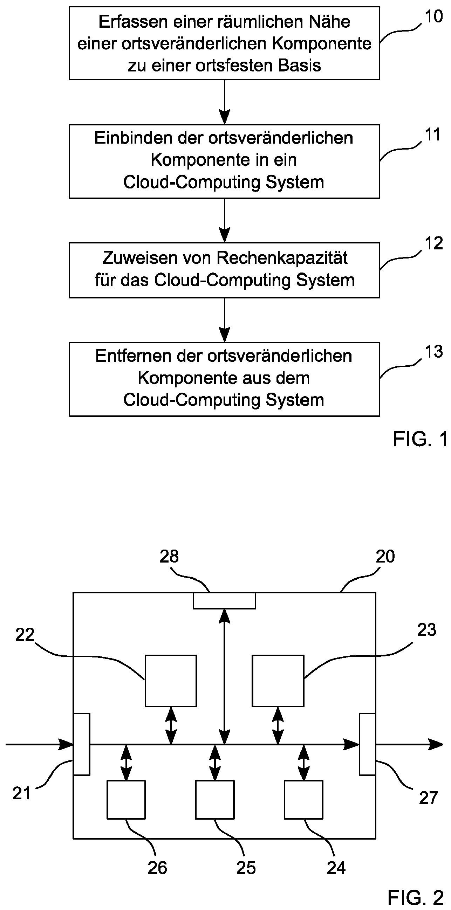

Fig. 1 zeigt schematisch ein Verfahren zum Betreiben eines Cloud-Computing-Systems mit zumindest einer ortsfesten Basis und ortsveränderlichen Komponenten. Bei den ortsveränderlichen Komponenten kann es sich z.B. um Kraftfahrzeuge oder mobile Nutzergeräte handeln. Die Basis kann insbesondere eine Basisstation für einen Mobilfunkdienst sein. In einem ersten Schritt wird erfasst 10, dass sich eine erste ortsveränderliche Komponente in einer räumlichen Nähe der ortsfesten Basis befindet. Dies kann beispielsweise auf Basis von Positionsinformationen, Routeninformationen oder Manöverdaten erfolgen, die durch die ortsveränderlichen Komponenten bereitgestellt werden. Die erste ortsveränderliche Komponente wird daraufhin in das Cloud-Computing-System eingebunden 11. Nach erfolgreicher Einbindung 11 erfolgt ein Zuweisen 12 von Rechenkapazität der ersten ortsveränderlichen Komponente für das Cloud-Computing-System. Die Rechenkapazität kann beispielsweise für eine Validierung eines Zertifikats oder einen Aufbau eines Umgebungsmodells in der Basis verwendet werden. Das Einbinden 11 und eine Zuweisung einer Aufgabe an die erste ortsveränderliche Komponente erfolgt dabei vorzugsweise durch die Basis. Wenn die erste ortsveränderliche Komponente zu einem späteren Zeitpunkt die räumlichen Nähe der ortsfesten Basis wieder verlässt, wird sie aus dem Cloud-Computing-System entfernt 13.

Fig. 2 zeigt eine vereinfachte schematische Darstellung einer ersten Ausführungsform einer Vorrichtung 20 zum Betreiben eines Cloud-Computing-Systems mit zumindest einer ortsfesten Basis und ortsveränderlichen Komponenten. Die Vorrichtung 20 ist vorzugsweise Bestandteil der Basis. Bei den ortsveränderlichen Komponenten kann es sich z.B. um Kraftfahrzeuge oder mobile Nutzergeräte handeln. Die Basis kann insbesondere eine Basisstation für einen Mobilfunkdienst sein. Die Vorrichtung 20 hat einen Eingang 21, über den Daten einer ortsveränderlichen Komponente empfangen werden können. Mittels eines Positionsprüfungsmoduls 22 wird erfasst, dass sich eine erste ortsveränderliche Komponente in einer räumlichen Nähe der ortsfesten Basis befindet. Das Positionsprüfungsmodul 22 kann dazu beispielsweise Positionsinformationen, Routeninformationen oder Manöverdaten auswerten, die durch die ortsveränderlichen Komponenten bereitgestellt werden. Ein Teilnehmerverwaltungsmodul 23 bindet die erste ortsveränderliche Komponente daraufhin in das Cloud-Computing-System ein. Nach erfolgreicher Einbindung wird dem Cloud-Computing-System mittels eines Kapazitätsverwaltungsmoduls 24 Rechenkapazität der ersten ortsveränderlichen Komponente zugewiesen. Die Rechenkapazität kann beispielsweise für eine Validierung eines Zertifikats oder einen Aufbau eines Umgebungsmodells in der Basis verwendet werden. Wenn die erste ortsveränderliche Komponente zu einem späteren Zeitpunkt die räumlichen Nähe der ortsfesten Basis wieder verlässt, wird sie vom Teilnehmerverwaltungsmodul 23 wieder aus dem Cloud-Computing-System entfernt.

Das Positionsprüfungsmodul 22, das Teilnehmerverwaltungsmodul 23 und das Kapazitätsverwaltungsmodul 24 können von einer Kontrolleinheit 25 gesteuert werden. Über eine Benutzerschnittstelle 28 können gegebenenfalls Einstellungen des Positionsprüfungsmoduls 22, des Teilnehmerverwaltungsmoduls 23, des Kapazitätsverwaltungsmoduls 24 oder der Kontrolleinheit 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Ebenso können Daten über einen Ausgang 27 der Vorrichtung 20 ausgegeben werden. Das Positionsprüfungsmodul 22, das Teilnehmerverwaltungsmodul 23, das Kapazitätsverwaltungsmodul 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

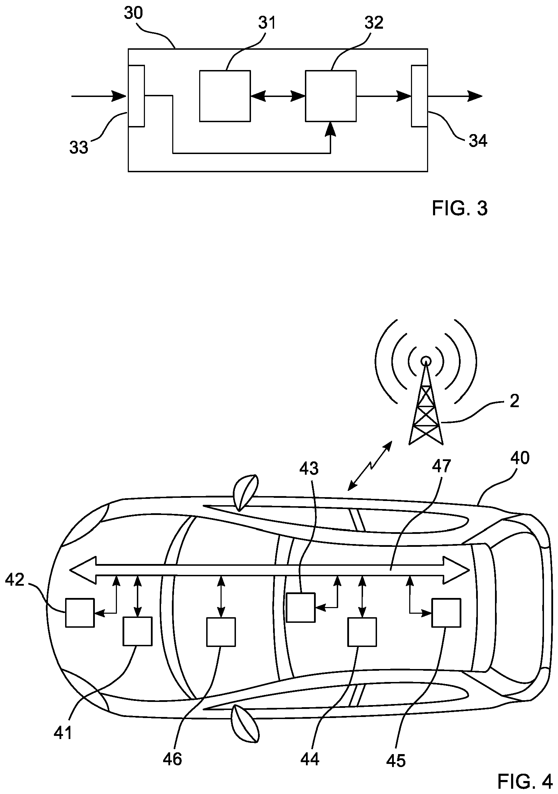

Fig. 3 zeigt eine vereinfachte schematische Darstellung einer zweiten Ausführungsform einer Vorrichtung 30 zum Betreiben eines Cloud-Computing-Systems mit zumindest einer ortsfesten Basis und ortsveränderlichen Komponenten. Die Vorrichtung 30 weist einen Prozessor 32 und einen Speicher 31 auf. Beispielsweise handelt es sich bei der Vorrichtung 30 um einen Computer oder einen Grafikchip. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Daten eines Kraftfahrzeugs oder eines mobilen Nutzergerätes. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Kraftfahrzeug 40, das zur Verwendung in einem erfindungsgemäßen Cloud-Computing-System eingerichtet ist. Bei dem Kraftfahrzeug 40 handelt es sich beispielsweise um ein autonomes, ein teilautonomes oder ein mit Assistenzsystemen 42 ausgestattetes Kraftahrzeug 40. Das Kraftfahrzeug 40 weist zumindest ein Rechnersystem 41 auf, das insbesondere durch ein Assistenzsystem 42 des Kraftfahrzeugs 40 genutzt werden kann, z.B. für das Verarbeiten von Sensordaten. Das Kraftfahrzeug 40 weist zudem eine Sensorik 43 auf, mit der Sensordaten erfasst werden können. Die Sensorik 43 kann insbesondere Sensoren zur Umfelderkennung umfassen, z.B. Ultraschallsensoren, Laserscanner, Radarsensoren, Lidarsensoren oder Kameras. Weitere Bestandteile des Kraftfahrzeugs 40 sind in diesem Beispiel ein Navigationssystem 44 sowie eine Datenübertragungseinheit 45. Mittels der Datenübertragungseinheit 45 kann eine Verbindung zu einer Basis 2 eines Cloud-Computing-Systems aufgebaut werden. Das Kraftfahrzeug 40 ist eingerichtet, in das Cloud-Computing-System eingebunden zu werden und dem Cloud-Computing-System Rechenkapazität des Rechnersystems 41 bereitzustellen. Zur Speicherung von Daten ist ein Speicher 46 vorhanden. Der Datenaustausch zwischen den verschiedenen Komponenten des Kraftfahrzeugs 40 erfolgt über ein Netzwerk 47.

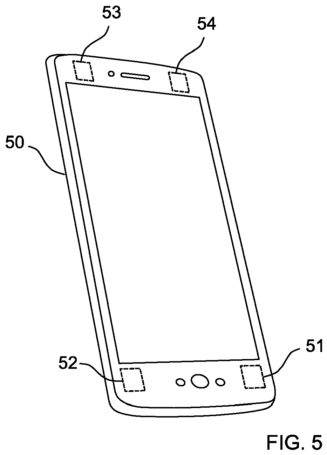

Fig. 5 zeigt schematisch ein mobiles Nutzergerät 50, das zur Verwendung in einem erfindungsgemäßen Cloud-Computing-System eingerichtet ist. In diesem Beispiel handelt es sich bei dem mobilen Nutzergerät 50 um ein Smartphone. Weitere Beispiele mobiler Nutzergeräte 50 sind Tablets, Laptops, etc. Das mobile Nutzergerät 50 weist einen Prozessor 51 auf, der insbesondere für das Ausführen von Anwendungen des mobilen Nutzergerätes 50 verwendet werden kann. Dabei kann der Prozessor 51 auf einen Speicher 52 des mobilen Nutzergerätes 50 zugreifen. Ein GPS-Modul 53 (GPS: Global Positioning System; Globales Positionsbestimmungssystem) erlaubt eine Positionsbestimmung des mobilen Nutzergerätes 50 und kann zudem im Rahmen eine Routenplanung und Navigation genutzt werden. Mittels einer Datenübertragungseinheit 54 kann eine Verbindung zu einer Basis 2 eines Cloud-Computing-Systems aufgebaut werden. Das mobile Nutzergerät 50 ist eingerichtet, in das Cloud-Computing-System eingebunden zu werden und dem Cloud-Computing-System Rechenkapazität des Prozessors 51 bereitzustellen.

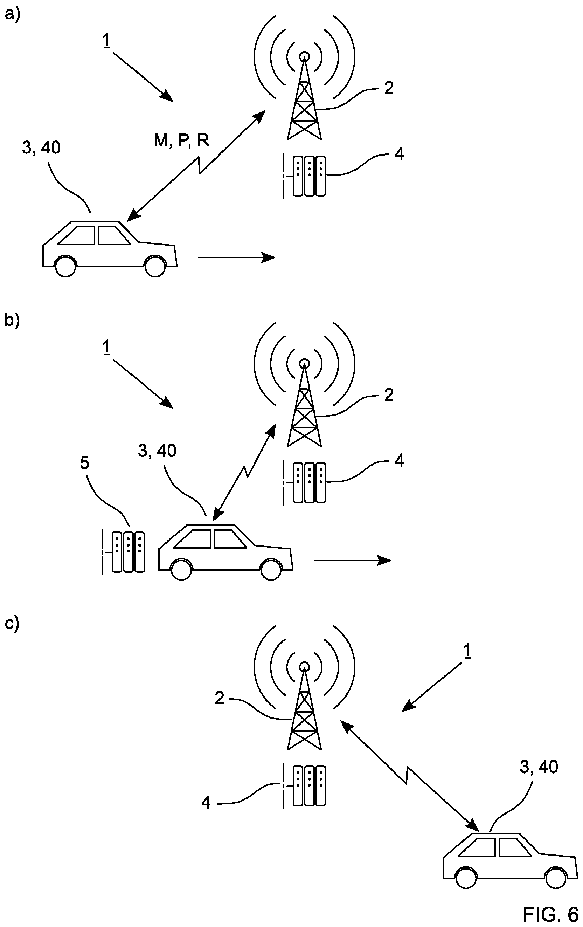

Fig. 6 zeigt schematisch die Verwendung eines Kraftfahrzeugs 40 als ortsveränderliche Komponente 3 in einem erfindungsgemäßen Cloud-Computing-System 1. Die Basis 2 ist in diesem Fall eine Basisstation für einen Mobilfunkdienst. Die Basis 2 hat einen lokalen Server 4, der eine lokale Cloud aufspannt. Ein sich der Basis 2 näherndes Kraftfahrzeug 40 übermittelt Positionsinformationen P, Routeninformationen R oder auch Manöverdaten M an die Basis 2. Dies ist in Fig. 6a) dargestellt. Befindet sich das Kraftfahrzeug 40 in einer gewünschten räumlichen Nähe zur Basis 2, werden die im Kraftfahrzeug 40 verfügbaren Ressourcen, insbesondere ein Rechnersystem, in die lokale Cloud eingebunden und sind nun ebenfalls Teil der lokalen Cloud. Das Rechnersystem im Kraftfahrzeug40 fungiert so als virtueller Server 5. Dies ist in Fig. 6b) dargestellt. Wenn das Kraftfahrzeug 40, wie in Fig. 6c) gezeigt, die räumliche Nähe zur Basis wieder verlässt, wird die Bindung zum virtuellen Server 5 im Kraftfahrzeug 40 wieder aufgelöst, d.h. das Kraftfahrzeug 40 verlässt die lokale Cloud.

## Patentansprüche

1. Verfahren zum Betreiben eines Cloud-Computing-Systems (1) mit zumindest einer ortsfesten Basis (2) und ortsveränderlichen Komponenten (3), mit den Sch ritten:
- Erfassen (10), dass sich eine erste ortsveränderliche Komponente (3) in einer räumlichen Nähe der ortsfesten Basis (2) befindet;
- Einbinden (11) der ersten ortsveränderlichen Komponente (3) in das Cloud-Computing-System (1), und
- Zuweisen (12) von Rechenkapazität der ersten ortsveränderlichen Komponente (3) für das Cloud-Computing-System (1).

2. Verfahren gemäß Anspruch 1, wobei die erste ortsveränderliche Komponente (3) aus dem Cloud-Computing-System (1) entfernt wird, wenn sie die räumlichen Nähe der ortsfesten Basis (2) verlässt.

3. Verfahren gemäß Anspruch 1 oder 2, wobei durch die ortsveränderlichen Komponenten (3) Positionsinformationen (P) bereitgestellt werden.

4. Verfahren gemäß einem der vorherigen Ansprüche, wobei durch die ortsveränderlichen Komponenten (3) Routeninformationen (R) oder Manöverdaten (M) bereitgestellt werden.

5. Verfahren gemäß einem der vorherigen Ansprüche, wobei das Einbinden (11) der ersten ortsveränderlichen Komponente (3) in das Cloud-Computing-System (1) und eine Zuweisung einer Aufgabe an die erste ortsveränderliche Komponente (3) durch die Basis (2) erfolgt.

6. Verfahren gemäß einem der vorherigen Ansprüche, wobei die ortsveränderlichen Komponenten (3) Kraftfahrzeuge (40) oder mobile Nutzergeräte (50) sind.

7. Verfahren gemäß einem der vorherigen Ansprüche, wobei die Rechenkapazität der ersten ortsveränderlichen Komponente (3) für eine Validierung eines Zertifikats oder einen Aufbau eines Umgebungsmodells in der Basis (2) verwendet wird.

8. Computerprogramm mit Instruktionen, die bei Ausführung durch einen Computer den Computer zur Ausführung der Schritte eines Verfahrens gemäß einem der Ansprüche 1 bis 7 zum Betreiben eines Cloud-Computing-Systems (1) veranlassen.

9. Vorrichtung (20) zum Betreiben eines Cloud-Computing-Systems (1) mit zumindest einer ortsfesten Basis (2) und ortsveränderlichen Komponenten (3), mit
- einem Positionsprüfungsmodul (22) zum Erfassen (10), dass sich eine erste ortsveränderliche Komponente (3) in einer räumlichen Nähe der ortsfesten Basis (2) befindet;
- einem Teilnehmerverwaltungsmodul (23) zum Einbinden (11) der ersten ortsveränderlichen Komponente (3) in das Cloud-Computing-System (1), und
- einem Kapazitätsverwaltungsmodul (24) zum Zuweisen (12) von Rechenkapazität der ersten ortsveränderlichen Komponente (3) für das Cloud-Computing-System (1).

10. Cloud-Computing-System (1) mit zumindest einer ortsfesten Basis (2) und ortsveränderlichen Komponenten (3), wobei das Cloud-Computing-System (1) eine Vorrichtung gemäß Anspruch 9 aufweist oder eingerichtet ist, ein Verfahren gemäß einem der Ansprüche 1 bis 7 zum Betreiben des Cloud-Computing-Systems (1) auszuführen.

11. Kraftfahrzeug (40) mit einem Rechnersystem (41), wobei das Kraftfahrzeug (40) eingerichtet ist, in ein Cloud-Computing-System (1) eingebunden zu werden (11) und dem Cloud-Computing-System (1) Rechenkapazität des Rechnersystems (41) bereitzustellen (12).

12. Mobiles Nutzergerät (50) mit einem Prozessor (51), wobei das mobile Nutzergerät (50) eingerichtet ist, in ein Cloud-Computing-System (1) eingebunden zu werden (11) und dem Cloud-Computing-System (1) Rechenkapazität des Prozessors (51) bereitzustellen (12).
